Europäisches Patentamt

(19) European Patent Office

Office européen des brevets

(11) Publication number: **0 294 977 B1**

## (12) EUROPEAN PATENT SPECIFICATION

(45) Date of publication of patent specification:
21.11.91 Bulletin 91/47

(51) Int. Cl.⁵: **C03C 4/12, C03C 10/00**

(21) Application number: 88304888.6

(22) Date of filing: 27.05.88

(54) Optical wave guides.

(30) Priority: 11.06.87 GB 8713698

(43) Date of publication of application:
14.12.88 Bulletin 88/50

(45) Publication of the grant of the patent:
21.11.91 Bulletin 91/47

(84) Designated Contracting States:
AT BE CH DE ES FR GB GR IT LI LU NL SE

(56) References cited:
WO-A-86/07348
DE-B- 2 417 963
FR-A- 2 238 679
JOURNAL OF THE AMERICAN CERAMIC
SOCIETY, vol. 56, no. 2, February 1973, pages
68-72; E.A. WEAVER et al.: "Lasing in a
phase-separated glass"
JOURNAL OF THE ELECTROCHEMICAL SOCI-
ETY, vol. 122, no. 1, January 1975, pages
101-107; F. AUZEL et al.: "Rare earth doped
vitroceramics: new, efficient, blue and green
emitting materials for infrared up-conversion"

(56) References cited:
JAPANESE JOURNAL OF APPLIED PHYSICS,
vol. 23, no. 6, June 1984, part 2, pages
L409-L411, Tokyo, JP; H. NAMIKAWA et al.:
"Preparation of Nd-doped SiO2 glasses by
axial injection plasma torch CVD and their
fluorescence properties"

(73) Proprietor: BRITISH TELECOMMUNICATIONS
public limited company
British Telecom Centre, 81 Newgate Street
London EC1A 7AJ (GB)

(72) Inventor: Ainslie, Benjamin James
24 Birchwood Drive
Rushmere Ipswich Suffolk, IP5 7EB (GB)
Inventor: Craig, Susan Patricia
81 Heath Lane
Ipswich Suffolk, IP4 5RX (GB)
Inventor: Davey, Steven Terrence
3 Roman Way
Felixstowe Suffolk (GB)

(74) Representative: Leng, Francis Edward et al
British Telecom Intellectual Property Unit
Room 1304 151 Gower Street
London WC1E 6BA (GB)

EP 0 294 977 B1

**EP 0 294 977 B1**

## Description

This invention relates to wave guides which have properties appropriate for use in lasing device' us they may be used, for example, as components of signal sources and signal amplifiers in optical telec. ..nuni- cations systems.

Because of their potential importance in telecommunications, there has been substantial interest in devices implemented in fibre configurations, eg fibre lasers and fibre amplifiers. Much of this work has utilised glasses which contain ions with laser properties, eg $Nd^{3+}$ ions. These ions are incorporated as part of the glass, eg they are incorporated in an amorphous phase or a solid solution. These special glasses constitute the path region of optical waveguides, eg the core of an optical fibre. During use, the device is pumped to produce a population inversion of the active ions so that lasing occurs.

It has only been possible to make glass which contains a limited concentration of active ions homogeneously dispersed throughout the glass before phase changes take place in the glass. It is desirable to increase their concentration, eg in order to make high gain short length devices. Weaver, Stewart and Neilson, in "Journal of the American Ceramic Society" vol 56 no 2 published February 1973 at pages 68 to 72 discuss the lasing parameters in a phase separated glass. They report that small amounts of phase separation increased the lasing efficiency but in general efficiencies decreased. Auzel et al in French patent specification 2238679 and in the "Journal of the Electrochemical Society" Vol. 122, No. 1 published January 1975 at pages 101-107 discuss rare earth doped vitroceramics for infrared up-conversion.

According to this invention, an optical wave guide with fluorescing or lasing properties has a path region formed of a glass composition comprising a continuous glass phase having dispersed therein crystallites with fluorescing or lasing properties.

It has surprisingly been found that wave guides of this nature have properties useful for lasers (and optical amplifiers). It would be expected that the disperse phase in the path region would cause scatter and hence give rise to unacceptably high attenuations at both pump and signal wavelengths. However, the size and concentration of the crystallites can be controlled so that the scatter attenuation is kept to an acceptably low level, eg below 10 dB/m and preferably below 1 dB/m based on fibre made from the glass. It will be appreciated that the use of a disperse phase avoids solubility limits, whereby higher concentrations of active lasing sites are possible.

It has also been reported that lasing ions can affect one another. Thus, even when solid solutions are chemically stable, active sites in close proximity interact adversely with one another and the performance of the laser is poor, a phenomenon known as concentration quenching. The crystallites can be made to operate by a different mechanism and the problem be avoided. Thus the use of crystallites gives good lasing action.

The (conventional) silica based glasses are suitable for use as the continuous phase. While the primary component of these glasses is $SiO_2$ other components are often present, especially $GeO_2$ to increase the ref- ractive index. Other dopants may also be present, eg to adjust melting points to facilitate lower processing temperatures and increase choice of host glass, eg $P_2O_5$, F, $Al_2O_3$.

The chemical species suitable for the crystallites includes rare earth oxides and phosphates. The phosphates conveniently have the formula $X'P_5O_{14}$ where $X'$ represents one or more rare earth elements. The oxides are $X''_2O_3$ where $X''$ represents one or more rare earth elements. The following are quoted as specific examples of suitable chemical species :

$NdP_5O_{14}$

$LaP_5O_{14}$

$CeP_5O_{14}$

$La_xNd_{(1-x)}P_5O_{14}$     where x is between 0 and 1

$Ce_yNd_{(1-y)}P_5O_{14}$     where y is between 0 and 1

$[X''_zNd_{(1-z)}]_2O_3$     where z is 0 to 1 inclusive

and $X''$ is selected from

La, Gd and Y.

Since the disperse phase will, at some time in its history, have been in chemical equilibrium with the continuous phase, the continuous phase will usually contain the rare earth as a dissolved species.

This invention also includes optical waveguides in the form of optical fibre, which may be either multimode

2

or monomode at the signal wavelength, wherein the core is made of a glass composition as described above and the cladding is made of a different glass composition having a lower refractive index.

For example, a fibre comprises a cladding consisting essentially of $SiO_2$ with a core consisting essentially of $SiO_2$ + $GeO_2$ (to raise the refactive index) and the dispersed lasing dopant. To minimise attenuation it would be desirable for the fibre to consist of, ie. to consist only of, the components mentioned. However, it is usually convenient to introduce processing additives, eg. $P_2O_5$ and F, and this can be done without changing the essential properties of the glass.

The glass composition which forms the path region of a wave guide according to the invention is conveniently made by preparing the crystallites from a precursor composition, eg. a single phase composition. The preparation may involve the simple precipitation of a dissolved species, eg. the precipitation of a dissolved rare earth oxide from an oxide glass such as $SiO_2$ + $GeO_2$. Alternatively it may involve the reaction of precursors to give, a new species, eg. the reaction of oxides with $P_2O_5$ to yield a precipitated phosphate.

Modern processes for making optical fibre usually include the preparation of the various glasses by deposition from a vapour phase oxidation reaction. The deposition is controlled to produce a suitable configuration for the mechanical preparation of the fibre. Typical preparation reactions include :

(i)        $SiCl_4 + O_2 = SiO_2 + 2Cl_2$
(ii)       $GeCl_4 + O_2 = GeO_2 + 2Cl_2$
(iii)      $4XCl_3 + O_2 = 2X_2O_3 + 6Cl_2$
           (where X is a rare earth)

Other reactants may also be used, eg volatile organo-metallic compounds which convert to the oxide, eg at high temperature and in the presence of oxygen.

Various embodiments of the invention will now be described by way of example with reference to the accompanying drawing in which :

Figure 1 illustrates, diagrammatically, MCVD used to prepare fibre according to the invention.

Figure 2 illustrates a source of rare earth for use in the MCVD illustrated in Figure 1, and

Figure 3 illustrates an amplifier including fibre according to this invention.

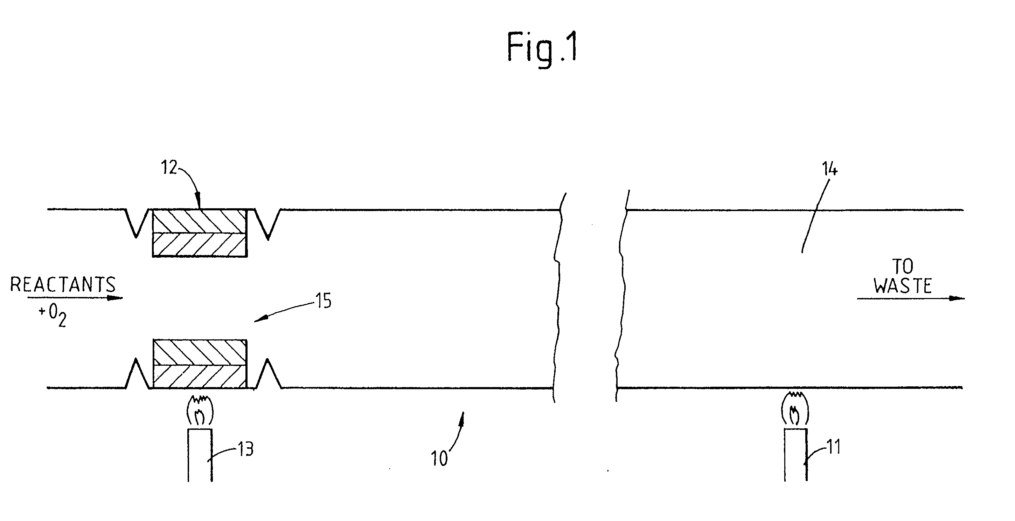

Figure 1 illustrates a conventional MCVD process in which a substrate tube 10 is rotated in a glass blowing lathe (not shown) and a reactant gas which comprises $O_2$ and $SiCl_4$ together with dopants such as $POCl_3$ (to adjust melting point) and $GeCl_4$ (to increase the refractive index) is introduced. A short segment of the tube, about 2 cm long, is heated to about 1600°C by means of a travelling flame 11. In this segment chlorides are converted into oxides which deposit in the form of a porous ring downstream of the flame 11. As the flame traverses the deposit fuses to form a thin layer of non-porous glass on the inner surface of the substrate tube 10.

Upstream of the deposition zone 14, the substrate tube 10 is formed into a source chamber 15 which contains a glass sponge 12 which is impregnated with the chloride of a rare earth metal. An independent burner 13 is provided to heat the source chamber 15.

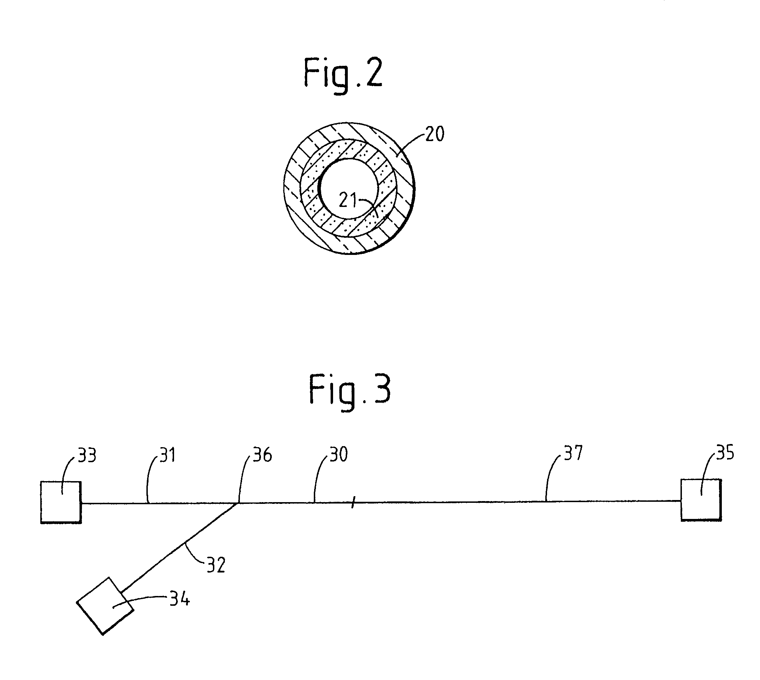

As shown in Figure 2 the sponge 12 comprises an outer layer 20 of non-porous glass and an inner layer 21 of spongy glass. The inner layer 21 is impregnated with the rare earth metal chloride. The sponge was prepared by depositing a porous layer on the inner surface of a substrate tube about 1 m long using MCVD technique as described above. The sponge was soaked with an alcoholic solution of the hydrated chloride. Excess solution was removed and the solvent was evaporated. Water of crystallisation was removed by heating in the presence of chlorine. The long tubular sponge was cut into segments about 2 cm long.

(The sponge 12 as well as its preparation and use is described in our co-pending applications BT patent case A23468).

Using the MCVD technique mentioned above conventional reactants, eg $SiCl_4$, $POCl_3$, $CCl_2F_2$ and $O_2$, were passed into the bore of a substrate tube and several glass layers were deposited on its inner surface. These layers constituted the precursor of the cladding of a fibre and they had the chemical composition of $SiO_2$ glass doped with $P_2O_5$ and F as melting point modifiers.

Thereafter the reactants were changed to $SiCl_4$, $POCl_3$, $GeCl_4$ and $O_2$ to deposit several layers constituting the precursor of the core of the fibre. During this deposition independent burner 13 was used to volatalise $NdCl_3$ into the reactant stream. Thus the chemical composition of the core precursor was $SiO_2$ glass doped with $GeO_2$, $P_2O_5$ and $Nd^{3+}$. Finally the tube was collapsed and drawn into fibre in the conventional way. Because there was a high concentration of rare earth, the oxide precipitated as a colloid at some stage during the process.

The attenuation of the fibre was measured at wave lengths of interest in the band 500 to 1700 nm. There are two mechanisms which cause the measured attenuation, namely absorption (by rare earth ions) and scatter. Both the continuous phase and the dispersed particles contribute to the absorption but only the dispersed particles cause scatter. The following attenuations were recorded :

| Wave length (nm) | Attenuation (dB/m) |
|---|---|
| 530 | 33 |
| 800 | 50 |
| 880 | 11 |
| 1060 | below 0.1 |

800 nm is the pump wave length (and 1060 nm is the signal wave length). Since $Nd^{3+}$ absorbs at its pump wave there is a high (50 dB/m) attenuation. $Nd^{3+}$ does not absorb at its signal wave length and the low attenuation (below 0.1 dB/m) is due to scatter.

This attenuation is acceptable for a laser device because using these high concentrations of lasing material the length of a device is likely to be less than 1 m and almost certainly less than 10 m. In any case the gain outweighs the loss and, therefore, a small increment in the length of the device compensates for the loss.

It is surprising that the two-phase system produces fibre which is low in loss. It is believed that the attenuation is low because the particle size is low, eg less than 0.1 of the pump wavelength. We have measured particle sizes typically 20 nm in diameter embedded in the glass matrix using transmission electron microscopy. The average concentration of $Nd^{3+}$ in the core was measured to be approximately $10^3$ ppm by weight.

We have measured the fluorescence spectrum of this core glass and observed sharp emission spikes superimposed on the broad fluorescence bands. This, we believe, is due to fluorescence from the crystallites (the sharp peak component) and from the $Nd^{3+}$ ions homogenously distributed in the glass (broad component).

In a second example we have made $Er^{3+}$ doped fibre in a way very similar to that described above, but $ErCl_3$ has been used instead of $NdCl_3$. Using a $SiO_2$-$P_2O_5$-$GeO_2$ host glass an average concentration of 7 × $10^3$ ppm $Er^{3+}$ resulted. Visual inspection of the preform under intense white light illumination showed that white light could be observed from the side of the preform core. When drawn into fibre, the scatter loss was measured at 750 nm (where $Er^{3+}$ does not absorb) and was found to be very low (less than 0.2 db/m), but the absorption bands were very strong :

| Wave length (nm) | Attenuation (dB/m) |
|---|---|
| 630 | 40 |
| 810 | 11 |

A strong band located at 520-530 nm was too intense to be resolved.

An alternative method of making fibre by MCVD (not illustrated) comprises depositing the core precursors conventionally and then depositing core precursors without the rare earth and at a low temperature so that the core precursors remain porous. After cooling, the porous layers of the core precursor are soaked with an alcoholic solution of a rare earth halide. The excess liquid is drained away, the solvent evaporated and the chloride dehydrated by heating with a mixture of $Cl_2/O_2$. At this stage the porous layer is fused and thereafter collapsed. Drawing proceeds as in the first described technique.

Figure 3 illustrates an arrangement to demonstrate the amplifying utility of fibre according to the invention.

Fibre 30, having a core consisting of rare earth dopant crystallite embedded in a glass matrix, is connected, at a junction 36, to (non-lasing) optical fibres 31 and 32. Fibre 32 is coupled to a laser 34 which provides pump frequency into the core of fibre 30. Fibre 31 is connected to a laser 33 which generates an optical signal.

The output end of fibre 30 is welded to a fibre 37. Detector 35 is coupled to the end of fibre 37.

In the use of the device, pump 34 causes a population inversion in the rare earth atoms contained in the core of fibre 30 and photons of signal, from laser 33, stimulate emmission from the inversion whereby amplified signals pass into fibre 37 for detection in detector 35.

We wish to draw attention to two sets of our co-pending patent applications.

Case 23468 (mentioned above) relates to the use of glass sponges to incorporate rare earths into optical fibre. The priority application was filed on 24 April 1986 in GB. The application number is 8610053 (now abandoned). Equivalent cases exist in :

Canada    filed 18 March 1987

EP 0 294 977 B1

EPO      filed 27 March 1987 (87302674) (EP-A-243010)
Japan    filed 23 March 1987 (87-101699)
USA      filed 20 March 1987 (028213)

Case 23492 relates (among other things) to optical fibres which contain colloidal particles in its core and/or cladding. The priority application was filed on 4 June 1986 in GB. The application number is 8613525. Foreign equivalents were filed in Canada, Japan and USA. The EPO case was filed on 20 May 1987 (87304500) (EP-A-248564).

## Claims

1. An optical wave guide with fluorescing or lasing properties which has a path region formed of a glass composition comprising a continuous glass phase having dispersed therein crystallites with fluorescing or lasing properties.

2. An optical wave guide according to claim 1, wherein the crystallites are selected from the oxides and phosphates of rare earth metals.

3. An optical fibre with fluorescing or lasing properties which fibre has a core formed of a glass composition comprising a continuous glass phase having dispersed therein crystallites with fluorescing or lasing properties.

4. A fibre according to claim 3, wherein the crystallites are selected from the oxides and phosphates of rare earth metals.

5. A fibre according to claim 4, wherein the oxides have the formula $X''_2O_3$ where $X''$ represents rare earth metals.

6. A fibre according claim 4, wherein the phosphates have the formula $X'P_5O_{14}$ where $X'$ represents rare earth metals.

7. A fibre according to any one of claims 4, 5 or 6, wherein the rare earth metals are selected from Nd, La, Ce, Gd and Y.

8. A fibre according to claim 4, wherein the crystallites are selected from :

$$Nd\ P_5O_{14}$$
$$La\ P_5O_{14}$$
$$Ce\ P_5O_{14}$$
$$La_xNd_{(1-x)}P_5O_{14} \qquad \text{where x is between 0 and 1}$$
$$Ce_yNd_{(1-y)}P_5O_{14} \qquad \text{where y is between 0 and 1}$$
$$[X''_zNd_{(1-z)}]_2O_3 \qquad \text{where z is 0 to 1 inclusive}$$

and $X''$ is selected from La, Gd and Y.

9. A fibre according to any one of claims 3-8, wherein the glass composition of the core contains between 1 ppm and $10^5$ ppm by weight of the rare earth element.

10. A fibre according to any one of claims 3-9, wherein the continous phase consists essentially of a mixture of $SiO_2$ and $GeO_2$.

11. A fibre according to claim 10, wherein the cladding of the fibre consists essentially of $SiO_2$.

12. An optical fibre according to any one of claims 3-11, which has a scatter attenuation of less than 10 dB/m at signal wave length.

13. An optical fibre according to claim 12, wherein the scatter attenuation is less than 1 dB/m.

14. A laser device which comprises an optical fibre according to any one of claims 3-13, and means for providing pump frequency radiation into the path region thereof.

15. An optical amplifier which comprises a laser device according to claim 14, means for providing an input optical signal into its path region and means for extracting amplified signals from its path region.

5

EP 0 294 977 B1

**Patentansprüche**

1. Lichtwellenleiter mit fluoreszierenden- oder Lasereigenschc ʻⁱ ...er einen Pfadbereich besitzt, gebildet aus einer Glaszusammensetzung, die eine kontinuierliche Glasphase mit darin dispergierten Kristalliten mit fluoreszierenden- oder Lasereigenschaften aufweist.

2. Lichtwellenleiter nach Anspruch 1, wobei die Kristallite aus Oxiden und Phosphaten der Seltenerdmetalle ausgewählt sind.

3. Optische Faser mit fluoreszierenden- oder Lasereigenschaften, wobei die Faser einen Kern besitzt, gebildet aus einer Glaszusammensetzung, die eine kontinuierliche Glasphase mit darin dispergierten Kristalliten mit fluoreszierenden- oder Lasereigenschaften aufweist.

4. Faser nach Anspruch 3, wobei die Kristallite aus Oxiden und Phosphaten der Seltenerdmetalle ausgewählt sind.

5. Faser nach Anspruch 4, wobei die Oxide die Formel $X''_2O_3$ besitzen und $X''$ ein Seltenerdmetall darstellt.

6. Faser nach Anspruch 4, wobei die Phosphate die Formel $X'P_5O_{14}$ besitzen und $X$, ein Seltenerdmetall darstellt.

7. Faser nach einem der Ansprüche 4, 5 oder 6, wobei die Seltenerdmetalle aus Nd, La, Ce, Gd und Y ausgewählt sind.

8. Faser nach Anspruch 4, wobei dip Kristallite ausgewählt sind aus :

$$NdP_5O_{14}$$

$$LaP_5O_{14}$$

$$CeP_5O_{14}$$

$$La_xNd_{(1-x)}P_5O_{14} \qquad \text{wobei } x \text{ zwischen } 0 \text{ und } 1 \text{ liegt}$$

$$Ce_yNd_{(1-y)}P_5O_{14} \qquad \text{wobei } y \text{ zwischen } 0 \text{ und } 1 \text{ liegt}$$

$$[X''_zNd_{(1-z)}]_2O_3 \qquad \text{wobei } z \text{ 0 bis 1 einschließlich ist}$$

und $X''$ aus La, Gd und Y ausgewählt ist.

9. Faser nach einem der Ansprüche 3 bis 8, wobei die Glaszusammensetzung des Kerns zwischen 1 ppm und $10^5$ ppm, bezogen auf das Gewicht, des Seltenerdelements enthält.

10. Faser nach einem der Ansprüche 3 bis 9, wobei die kontinuierliche Phase im wesentlichen aus einem Gemisch aus $SiO_2$ und $GeO_2$ besteht.

11. Faser nach Anspruch 10, wobei der Mantel der Faser im wesentlichen aus $SiO_2$ besteht.

12. Optische Faser nach einem der Ansprüche 3 bis 11, welche eine Streuungsdämpfung von weniger als 10 dB/m bei der Signalwellenlänge besitzt.

13. Optische Faser nach Anspruch 12, wobei die Streuungsdämpfung weniger als 1 dB/m beträgt.

14. Laservorrichtung, enthaltend eine optische Faser nach einem der Ansprüche 3 bis 13, und eine Einrichtung zur Bereitstellung von Pumpfrequenzstrahlung in deren Pfadbereich.

15. Optischer Verstärker, enthaltend eine Laservorrichtung nach Anspruch 14, eine Einrichtung zur Bereitstellung eines optischen Eingangssignals in deren Pfadbereich und eine Einrichtung zur Gewinnung verstärkter Signale aus deren Pfadbereich.

**Revendications**

1. Un guide d'ondes optique possédant des propriétés fluorescentes ou à effet laser qui comporte une zone de trajet formée sur une composition de verre comprenant une phase continue de verre dans laquelle sont dispersées des cristallites à propriétés fluorescentes ou à effet laser.

2. Un guide d'ondes optique selon la revendication 1, dans lequel les cristallites sont choisies parmi les oxydes et les phosphates de métaux des terres rares.

3. Un fibre optique à propriétés fluorescentes ou à effet laser, cette fibre possédant un noyau formé d'une

6

composition de verre comprenant une phase continue de verre dans laquelle sont dispersées des cristallites à propriétés fluorescentes ou à effet laser.

4. Une fibre selon la revendication 3, dans laquelle les cristallites sont choisies parmi les oxydes et les phosphates de métaux des terres rares.

5. Une fibre selon la revendication 4, dans laquelle les oxydes sont de la formule $X''_2O_3$ où $X''$ représente des métaux des terres rares.

6. Une fibre selon la revendication 4, dans laquelle les phosphates sont de la formule $X'P_5O_{14}$ où $X'$ représente les métaux des terres rares.

7. Une fibre selon l'une quelconque des revendications 4, 5 ou 6, dans laquelle les métaux des terres rares sont choisis parmi Nd, La, Ce, Gd et Y.

8. Une fibre selon la revendication 4, dans laquelle les cristallites sont choisies parmi

$$Nd\ P_5O_{14}$$
$$La\ P_5O_{14}$$
$$Ce\ P_5O_{14}$$
$$La_xNd_{(1-x)}P_5O_{14} \qquad \text{où x est compris entre 0 et 1}$$
$$Ce_yNd_{(1-y)}P_5O_{14} \qquad \text{où y est compris entre 0 et 1}$$

$[X''_zNd_{(1-z)}]_2O_3$ où z est compris entre 0 et 1 inclus et $X''$ est choisi parmi La, Gd et Y.

9. Une fibre selon l'une quelconque des revendications 3 à 8, dans laquelle la composition du verre du noyau contient de 1 ppm à $10^5$ ppm en poids de l'élément de terre rare.

10. Une fibre selon l'une quelconque des revendications 3 à 9, dans laquelle la phase continue consiste essentiellement en un mélange de $SiO_2$ et $GeO_2$.

11. Une fibre selon la revendication 10 dans laquelle le revêtement de la fibre consiste essentiellement en $SiO_2$.

12. Une fibre selon l'une quelconque des revendications 3 à 11 dont l'atténuation par dispersion est inférieure à 10 dB/m à la longueur du signal.

13. Une fibre optique selon la revendication 12, dans laquelle l'atténuation par dispersion est inférieure à 1 dB/m.

14. Un dispositif laser qui comprend une fibre optique selon l'une quelconque des revendications 3 à 13 et des moyens pour fournir un rayonnement de fréquence de pompe dans sa zone de trajet.

15. Un amplificateur qui comprend un dispositif laser selon la revendication 14, des moyens pour fournir un signal optique d'entrée dans sa zone de trajet et des moyens pour extraire des signaux amplifiés de sa zone de trajet.

Fig.1

# Fig.2

# Fig.3

EP 0 294 977 B1